# EUROPEAN PATENT SPECIFICATION

(11) **EP 4 550 762 B1**
(45) Date of publication and mention of the grant of the patent: **25.11.2026**
(21) Application number: 23849381.1
(22) Date of filing: 01.08.2023
(51) Int. Cl.: H04L 69/163, H04L 69/06, H04L 69/22, H04L 69/324

(54) **COMMUNICATION METHOD AND DEVICE, AND STORAGE MEDIUM**
KOMMUNIKATIONSVERFAHREN UND -VORRICHTUNG SOWIE SPEICHERMEDIUM
PROCÉDÉ ET DISPOSITIF DE COMMUNICATION, ET SUPPORT DE STOCKAGE

(30) Priority: 04.08.2022 CN 202210932395
(43) Date of publication of application: 07.05.2025
(73) Proprietor: Huawei Technologies Co., Ltd., Shenzhen, Guangdong 518129 (CN)
(72) Inventor: ZENG, Weidong, Shenzhen, Guangdong 518129 (CN)
(74) Representative: Körber, Martin Hans
(86) International application number: PCT/CN2023/110463
(87) International publication number: WO 2024/027674

(56) References cited:
- CN-A- 104 994 014
- CN-A- 105 282 114
- CN-A- 112 039 824
- CN-A- 113 302 887
- CN-A- 114 500 475
- US-A1- 2017 111 412
- US-B1- 6 674 744
- US-B1- 8 913 617
- WANG JIAN-PING; HUANG TAO; LI QI-YUE; SUN WEI: "Architecture and Protocol Stack Design for New Wireless IOT Network", CONTROL AND INSTRUMENTS IN CHEMICAL INDUSTRY, vol. 43, no. 10, 10 October 2016 (2016-10-10), pages 1085 - 1090, XP009552313, ISSN: 1000-3932

## Description

### TECHNICAL FIELD

This application relates to the communication field, and in particular, to a communication method, a device, and a storage medium.

### BACKGROUND

The transmission control protocol (transmission control protocol, TCP) is a reliable transmission protocol designed for the Internet, and bandwidth utilization is fully considered in the transmission control protocol.

However, in some application scenarios, for example, in ecosystem application scenarios developed by vendors, TCP cannot meet a communication requirement as a transmission protocol, and is no longer applicable. Main reasons are as follows: 1. TCP congestion control is static, and congestion control strategies for different links are the same, but flexible congestion control strategies may be required in the ecosystem application scenarios developed by the vendors. 2. TCP is deeply bound to the Internet protocol (internet protocol, IP), and protocol overheads are high, but a protocol with high data transmission efficiency may be required in the ecosystem application scenarios developed by the vendors. In other words, the protocol overheads need to be low. 3. TCP has complex logic and poor portability, and cannot be lightweight, but a lightweight protocol with high portability is required in the ecosystem application scenarios developed by the vendors, to facilitate deployment of the vendors, thereby meeting requirements for a low-delay and high-bandwidth network.

US 6 674 744 B1 discloses a device and method utilized for packaging voice data for point-to-point transport from one Packet Circuit Gateway (PCG) to a second PCG over Label Switching Routers (LSRs) within an IP network.

### SUMMARY

This application provides a communication method, devices, and storage mediums, and computer programs, to help improve communication efficiency and improve user experience. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, a communication method is provided, applied to a sending device, including:
obtaining a payload of an application layer;
encapsulating the payload of the application layer to obtain a heterogeneous-network data frame, where the heterogeneous-network data frame does not include a network layer protocol frame header, and a length of a frame header of the heterogeneous-network data frame is less than a length of a transport layer protocol frame header; and
sending the heterogeneous-network data frame to a receiving device in a heterogeneous network.

A frame format of the heterogeneous-network data frame is designed, so that the frame header of the heterogeneous-network data frame does not include the network layer protocol frame header, and the length of the frame header of the heterogeneous-network data frame is less than the length of the conventional transport layer frame header. This can reduce header overheads, thereby improving data transmission efficiency.

In a possible implementation, the frame header of the heterogeneous-network data frame includes a window length indication. The window length indication indicates a receive window length, and a length of the window length indication is 8 bits.

The 8-bit window length indication indicates the receive window length. This can reduce header overheads of the receive window length, thereby improving the data transmission efficiency.

In a possible implementation, a first bit of the window length indication indicates whether a window scaling factor exists, and last 7 bits of the window length indication indicate a basic length of a receive window.

The first bit of the window length indication indicates whether the window scaling factor exists, and coarse adjustment and fine adjustment of the window may be implemented based on both the window scaling factor and the basic length of the window. This can meet window adjustment requirements in different scenarios, thereby improving the transmission efficiency.

In a possible implementation, if the first bit of the window length indication indicates that the window scaling factor exists, the receive window length is determined based on the basic length of the receive window and the window scaling factor. The window scaling factor is obtained through negotiation between the sending device and the receiving device.

Any window size within a length of 65535 may be represented by using 1 byte, so that overheads used to represent the window size can be reduced.

In a possible implementation, the frame header of the heterogeneous-network data frame includes at least one of the following:
a merge indication, where the merge indication indicates whether a current heterogeneous-network data frame is to be merged with a subsequent heterogeneous-network data frame, and a length of the merge indication is 1 bit;
a flow label, where the flow label indicates an address of the receiving device, and a length of the flow label is 16 bits; and
a transmit index indication, where the transmit index indication indicates a quantity of times of transmitting or retransmitting the heterogeneous-network data frame, and a length of the transmit index indication is 2 bits.

The 1-bit merge indication may be used for segment division of a service, so that the receiving device learns of segments of the service. This can improve efficiency of querying the service by the receiving device.

The 16-bit flow label is used to replace a conventional TCP/IP 5-tuple having high overheads. This can reduce the header overheads.

The 2-bit transmit index indication is used to replace a conventional 32-bit timestamp. This can greatly reduce the header overheads.

In a possible implementation, the method further includes:
sending a connection request to the receiving device, where the connection request is carried in the heterogeneous-network data frame, and the connection request is used to request to establish a connection to the receiving device; and/or
sending a termination request to the receiving device, where the termination request is carried in the heterogeneous-network data frame, and the termination request is used to initiate disconnection from the receiving device.

The connection request is carried in the heterogeneous-network data frame, so that the sending device can initiate the connection request with small header overheads, thereby improving communication efficiency.

The termination request is carried in the heterogeneous-network data frame, so that the sending device can initiate the termination request with small header overheads, thereby improving the communication efficiency.

In a possible implementation, the method further includes:
in a process of establishing the connection to the receiving device, obtaining a congestion control algorithm through negotiation with the receiving device.

In the process of establishing the connection, the congestion control algorithm is obtained through dynamic negotiation with the receiving device. This can improve flexibility of congestion control, improve bandwidth utilization, and reduce a transmission delay, thereby improving service processing efficiency.

In a possible implementation, the method further includes:
in the process of establishing the connection to the receiving device, performing session negotiation with the receiving device, where a parameter for session negotiation is carried in an extension header of the heterogeneous-network data frame.

The parameter is obtained through negotiation with the receiving device in the establishment process. In this way, a corresponding parameter does not need to be carried in the frame header in a data transmission process with the receiving device. This can reduce the header overheads, thereby further improving the transmission efficiency.

In a possible implementation, the heterogeneous network includes one or more of wireless fidelity Wi-Fi, Bluetooth, Bluetooth low energy, and the Ethernet.

The heterogeneous network is diversified to expand an application scenario of the heterogeneous-network data frame, so that the heterogeneous-network data frame has high compatibility.

In a possible implementation, after the sending the heterogeneous-network data frame to a receiving device in a heterogeneous network, the method further includes:
receiving acknowledgment information sent by the receiving device, where the acknowledgment information is used to acknowledge one or more heterogeneous-network data frames sent by the sending device.

A plurality of heterogeneous-network data frames are acknowledged by using one piece of acknowledgment information. This avoids a case in which a plurality of pieces of acknowledgment information are sent to acknowledge the plurality of heterogeneous-network data frames, thereby improving the communication efficiency and improving the data transmission efficiency.

According to a second aspect, a communication method is further provided, applied to a receiving device, including:
receiving a heterogeneous-network data frame in a heterogeneous network, where the heterogeneous-network data frame does not include a network layer protocol frame header, and a length of a frame header of the heterogeneous-network data frame is less than a length of a transport layer protocol frame header;
decapsulating the heterogeneous-network data frame to obtain a payload; and
sending the payload to an application layer of the receiving device.

A frame format of the heterogeneous-network data frame is designed, so that the frame header of the heterogeneous-network data frame does not include the network layer protocol frame header, and the length of the frame header of the heterogeneous-network data frame is less than the length of the conventional transport layer frame header. This can reduce header overheads, thereby improving data transmission efficiency.

In a possible implementation, after the receiving a heterogeneous-network data frame in a heterogeneous network, the method further includes:
sending acknowledgment information to a sending device, where the acknowledgment information is used to acknowledge one or more heterogeneous-network data frames sent by the sending device.

The acknowledgment information used to acknowledge a plurality of heterogeneous-network data frames is sent to the sending device, to prevent a plurality of pieces of heterogeneous-network data from being acknowledged for a plurality of times. This can avoid network congestion caused by sending the acknowledgment information for a plurality of times, thereby improving bandwidth utilization.

In a possible implementation, before the receiving a heterogeneous-network data frame in a heterogeneous network, the method further includes:
receiving a connection request sent by the sending device, and establishing a connection to the sending device based on the connection request, where the connection request is carried in a heterogeneous-network data frame; and/or
sending a termination request to the sending device, where the termination request is carried in a heterogeneous-network data frame, and the termination request is used to initiate disconnection from the sending device.

The connection request is carried in the heterogeneous-network data frame, so that the receiving device can initiate the connection request with small header overheads, thereby improving communication efficiency.

The termination request is carried in the heterogeneous-network data frame, so that the receiving device can initiate the termination request with small header overheads, thereby improving the communication efficiency.

In a possible implementation, the method further includes:
in a process of establishing the connection to the sending device, obtaining a congestion control algorithm through negotiation with the sending device.

In the process of establishing the connection, the congestion control algorithm is obtained through dynamic negotiation with the sending device. This can improve flexibility of congestion control, improve bandwidth utilization, and reduce a transmission delay, thereby improving service processing efficiency.

In a possible implementation, the method further includes:
in the process of establishing the connection to the sending device, performing session negotiation with the sending device, where a parameter for session negotiation is carried in an extension header of the heterogeneous-network data frame.

The parameter is obtained through negotiation with the sending device in the establishment process. In this way, a corresponding parameter does not need to be carried in the frame header in a data transmission process with the sending device. This can reduce the header overheads, thereby further improving the transmission efficiency.

In a possible implementation, the heterogeneous network includes one or more of wireless fidelity Wi-Fi, Bluetooth, Bluetooth low energy, and the Ethernet.

The heterogeneous network is diversified to expand an application scenario of the heterogeneous-network data frame, so that the heterogeneous-network data frame has high compatibility.

According to a third aspect, a sending device is provided. The sending device includes modules/units that perform the method according to any one of the first aspect or the possible designs of the first aspect. These modules/units may be implemented by hardware, or may be implemented by hardware by executing corresponding software.

According to a fourth aspect, a receiving device is further provided. The receiving device includes modules/units that perform the method according to any one of the second aspect or the possible designs of the second aspect. These modules/units may be implemented by hardware, or may be implemented by hardware by executing corresponding software.

According to a fifth aspect, a sending device is further provided, including a processor and a memory. The memory is configured to store a computer program, and the processor is configured to run the computer program for the sending device to implement the communication method according to the first aspect.

According to a sixth aspect, a receiving device is further provided, including a processor and a memory. The memory is configured to store a computer program, and the processor is configured to run the computer program for the receiving device to implement the communication method according to the second aspect.

According to a seventh aspect, a computer-readable storage medium is further provided. The computer-readable storage medium stores a computer program, and when the computer program is run on a computer, the computer is enabled to implement the communication method according to the first aspect or the second aspect.

According to an eighth aspect, a computer program is provided. When the computer program is run on a processor of a sending device, the sending device is enabled to perform the communication method according to the first aspect. When the computer program is run on a processor of a receiving device, the receiving device is enabled to perform the communication method according to the second aspect.

In a possible design, the program in the eighth aspect may be all or partially stored in a storage medium that is encapsulated with a processor, or may be all or partially stored in a memory that is not encapsulated with a processor.

According to a ninth aspect, a communication system is provided, including the sending device according to the fifth aspect and the receiving device according to the sixth aspect.

### BRIEF DESCRIPTION OF DRAWINGS

FIG. 1 is a diagram of an architecture of an application scenario according to an embodiment of this application;
FIG. 2 is a diagram of a structure of a device according to an embodiment of this application;
FIG. 3 is a diagram of an architecture of a protocol stack according to an embodiment of this application;
FIG. 4a is a diagram of a heterogeneous-network data frame according to an embodiment of this application;
FIG. 4b is a diagram of a universal extension header according to an embodiment of this application;
FIG. 4c is a diagram of an extension header carrying a Flow Label parameter according to an embodiment of this application;
FIG. 4d is a diagram of an extension header carrying an MSS parameter according to an embodiment of this application;
FIG. 4e is a diagram of an extension header carrying a Scaling Factor parameter according to an embodiment of this application;
FIG. 4f is a diagram of an extension header carrying a Service ID parameter according to an embodiment of this application;
FIG. 4g is a diagram of an extension header carrying an SN parameter according to an embodiment of this application;
FIG. 5 is a diagram of an L2 frame format according to an embodiment of this application;
FIG. 6 is a diagram of a change of a state machine according to an embodiment of this application;
FIG. 7 is a schematic flowchart of an embodiment of a communication method according to this application;
FIG. 8 is a schematic flowchart of another embodiment of a communication method according to this application;
FIG. 9 is a diagram of a data block transmission mode according to an embodiment of this application;
FIG. 10 is a schematic flowchart of still another embodiment of a communication method according to this application;
FIG. 11 is a diagram of a structure of an embodiment of a sending device according to this application; and
FIG. 12 is a diagram of a structure of an embodiment of a receiving device according to this application.

### DESCRIPTION OF EMBODIMENTS

In embodiments of this application, unless otherwise specified, the character "/" indicates an "or" relationship between associated objects. For example, A/B may indicate A or B. "And/or" describes an association relationship between the associated objects, and indicates that three relationships may exist. For example, A and/or B may indicate the following three cases: Only A exists, both A and B exist, and only B exists.

It should be noted that, terms such as "first" and "second" in embodiments of this application are merely used for distinction in description, and cannot be understood as an indication or implication of relative importance or an implicit indication of a quantity of indicated technical features, or an indication or implication of a sequence.

In embodiments of this application, "at least one" means one or more, and "a plurality of" means two or more. In addition, "at least one of the following items (pieces)" or a similar expression thereof means any combination of these items, including any combination of singular items (pieces) or plural items (pieces). For example, at least one item (piece) of A, B, or C may indicate A, B, C, A and B, A and C, B and C, or A, B, and C. A, B, and C each may be an element, or may be a set that includes one or more elements.

In embodiments of this application, "example", "in some embodiments", "in another embodiment", and the like are used to indicate giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding and related)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that when "equal to" is used together with "greater than", "equal to" cannot be used together with "less than"; and when "equal to" is used together with "less than", "equal to" cannot be used together with "greater than".

TCP is a reliable transmission protocol designed for the Internet, and bandwidth utilization is fully considered in TCP.

However, in some application scenarios, for example, in ecosystem application scenarios developed by vendors, TCP cannot meet a communication requirement as a transmission protocol, and is no longer applicable.

An embodiment of this application provides a communication method, applied to a device, to improve communication efficiency and meet a network deployment requirement.

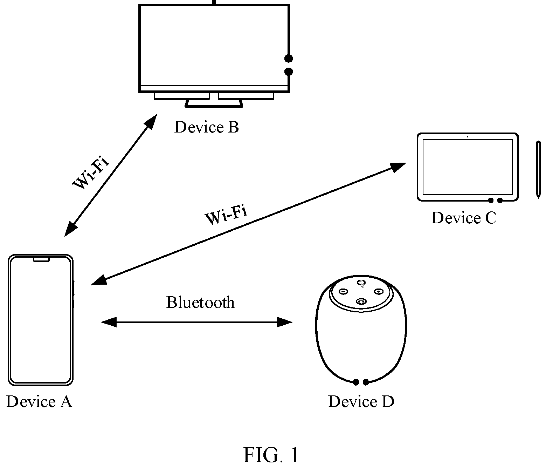

The following describes the communication method provided in embodiments of this application with reference to FIG. 1 to FIG. 10.

FIG. 1 is a diagram of an architecture of an application scenario according to an embodiment of this application. As shown in FIG. 1, the application scenario includes a plurality of devices, for example, a device A, a device B, a device C, and a device D. A heterogeneous network may be formed between the plurality of devices, and the heterogeneous network is a network with diversified transmission media. For example, the transmission media includes but are not limited to wireless fidelity (wireless fidelity, Wi-Fi), Bluetooth (bluetooth, BT), Bluetooth low energy (bluetooth low energy, BLE), and the Ethernet (ethernet, ETH).

It may be understood that only four devices in the application scenario are show as an example, but this does not constitute a limitation on embodiments of this application. In some embodiments, an application scenario in which there are more than four devices or fewer than four devices may be alternatively included.

The device may be a fixed terminal, for example, a notebook computer, a desktop computer, or a smart home device. The device may alternatively be a mobile terminal, for example, a mobile phone or a tablet. The mobile terminal may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The mobile terminal may be a station (STATION, ST) in a WLAN; or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, a vehicle-mounted device, an Internet of Vehicles terminal, a computer, a laptop computer, a handheld communication device, a handheld computing device, a satellite radio device, a wireless modem card, a television set top box (set top box, STB), customer premises equipment (customer premises equipment, CPE), and/or another device configured to perform communication in a wireless system, or a mobile terminal in a next-generation communication system like a 5G network, or a mobile terminal in a future evolved public land mobile network (Public Land Mobile Network, PLMN), or the like. The mobile terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction.

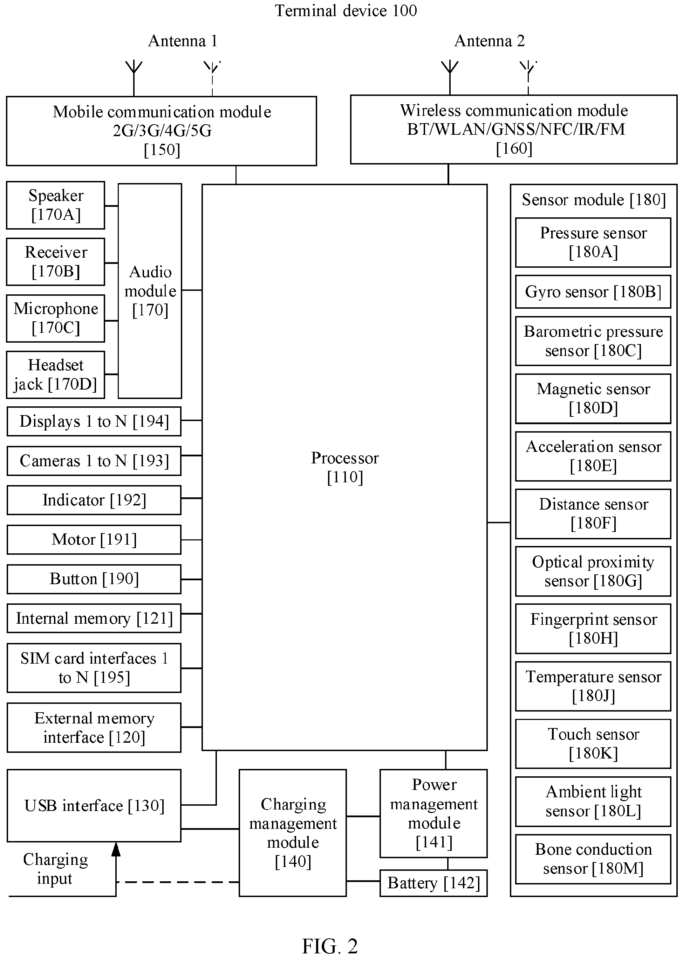

FIG. 2 is an example of a diagram of a structure of a device 100.

The device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the device 100. In some other embodiments of this application, the device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on a structure of the device 100. In some other embodiments of this application, the device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the device 100. The charging management module 140 may further supply power to the device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert a processed signal into an electromagnetic wave for radiation through the antenna 2.

In some embodiments, the antenna 1 and the mobile communication module 150 in the device 100 are coupled, and the antenna 2 and the wireless communication module 160 in the device 100 are coupled, so that the device 100 can communicate with a network and another device by using a wireless communication technology.

The device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel.

The device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the device 100 may include one or N cameras 193, where N is a positive integer greater than 1.

The digital signal processor is configured to process a digital signal, and may further process another digital signal in addition to the digital image signal. For example, when the device 100 selects a frequency, the digital signal processor is configured to perform Fourier transform and the like on frequency energy.

The video codec is configured to compress or decompress a digital video. The device 100 may support one or more video codecs. In this way, the device 100 may play or record videos in a plurality of encoding formats.

The NPU is a neural-network (neural-network, NN) computing processor, quickly processes input information by referring to a structure of a biological neural network, for example, by referring to a mode of transmission between human brain neurons, and may further continuously perform self-learning. The NPU may be configured to implement applications such as intelligent cognition of the device 100, for example, image recognition, facial recognition, voice recognition, and text understanding.

The external memory interface 120 may be used to connect to an external storage card, for example, a micro SD card, to extend a storage capability of the device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the device 100, and the like. In addition, the internal memory 121 may include a high-speed random access memory, or may include a nonvolatile memory, for example, at least one magnetic disk storage device and a flash memory. The processor 110 runs the instructions stored in the internal memory 121, and/or the instructions stored in the memory arranged in the processor to perform various function applications and data processing of the device 100.

The device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal.

The gyro sensor 180B may be configured to determine a motion posture of the device 100. In some embodiments, an angular velocity of the device 100 around three axes (namely, axes x, y, and z) may be determined by using the gyro sensor 180B.

The barometric pressure sensor 180C is configured to measure barometric pressure. In some embodiments, the device 100 calculates an altitude based on a barometric pressure value measured by the barometric pressure sensor 180C, to assist in positioning and navigation.

The magnetic sensor 180D includes a Hall sensor.

The acceleration sensor 180E may detect magnitude of accelerations in various directions (usually on three axes) of the device 100.

The distance sensor 180F is configured to measure a distance. The device 100 may measure a distance by using infrared or laser. In some embodiments, in a photographing scenario, the device 100 may measure the distance by using the distance sensor 180F, to implement fast focusing.

The optical proximity sensor 180G may include, for example, a light-emitting diode (LED) and an optical detector, for example, a photodiode.

The ambient light sensor 180L is configured to sense ambient light brightness.

The fingerprint sensor 180H is configured to collect a fingerprint. The device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194.

The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

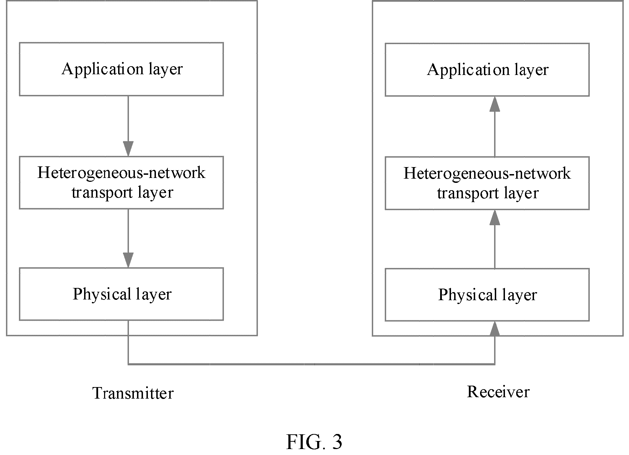

FIG. 3 is a diagram of an architecture of a protocol stack of a device according to an embodiment of this application. Refer to FIG. 3. The architecture of the protocol stack includes an application layer, a heterogeneous-network transport layer, and a physical layer. The application layer is used to generate or receive service data, and the service data may also be considered as a payload. It may be understood that a device serving as a sending device generates the service data, and a device serving as a receiving device receives the service data. The heterogeneous-network transport layer is used to encapsulate the service data to obtain a heterogeneous-network data frame, or is used to decapsulate a heterogeneous-network data frame to obtain the service data. For example, the heterogeneous-network transport layer is a Huawei softbus structure communication (softbus fabric communication, SFC) layer, and the heterogeneous-network data frame may be an SFC frame. It may be understood that the SFC is merely an example for description, and does not constitute a limitation on embodiments of this application. During specific application, the heterogeneous-network transport layer may have any name, provided that a function that is the same as that of the heterogeneous-network transport layer is implemented. The device serving as the sending device receives the service data from the application layer, and encapsulates the service data from the application layer to obtain the heterogeneous-network data frame. The device serving as the receiving device receives the heterogeneous-network data frame from the physical layer, and decapsulates the heterogeneous-network data frame to obtain the service data. In addition, the heterogeneous-network transport layer may further include a congestion control algorithm, to implement congestion control. The physical layer is used to send the heterogeneous-network data frame to a peer end or receive the heterogeneous-network data frame from a peer end. It may be understood that the device serving as the sending device sends the heterogeneous-network data frame to the receiving device, and the device serving as the receiving device receives the heterogeneous-network data frame from the sending device.

It can be learned that, in the foregoing architecture of the protocol stack, the heterogeneous-network transport layer replaces a conventional transport layer protocol, for example, a TCP layer or a user datagram protocol (User Datagram Protocol, UDP) layer. In addition, this application is applied to communication in a same local area network. Layer 2 communication (for example, a media access control layer) is enough for communication, without participation of a layer 3 (for example, an IP layer). Therefore, the IP layer may be omitted, so that an IP encapsulation process can be omitted. This reduces a data processing delay, thereby effectively reducing a delay and improving communication efficiency. In addition, because the IP layer no longer participates in data encapsulation, header overheads can be greatly reduced, and data transmission efficiency can be further improved. In addition, the heterogeneous-network transport layer is completely decoupled from the physical layer, and is not bound to another protocol layer (for example, the IP layer), so that the architecture of the protocol stack becomes lightweight, and portability is improved, to meet a network deployment requirement.

It should be noted that, in this embodiment of this application, the heterogeneous-network transport layer is constructed to implement encapsulation of the payload of the application layer, but this does not constitute a limitation on embodiments of this application. In some embodiments, the heterogeneous-network transport layer may not be constructed, but the function of the heterogeneous-network transport layer is transplanted to the application layer. In this way, the payload of the application layer may be encapsulated into the heterogeneous-network data frame at the application layer.

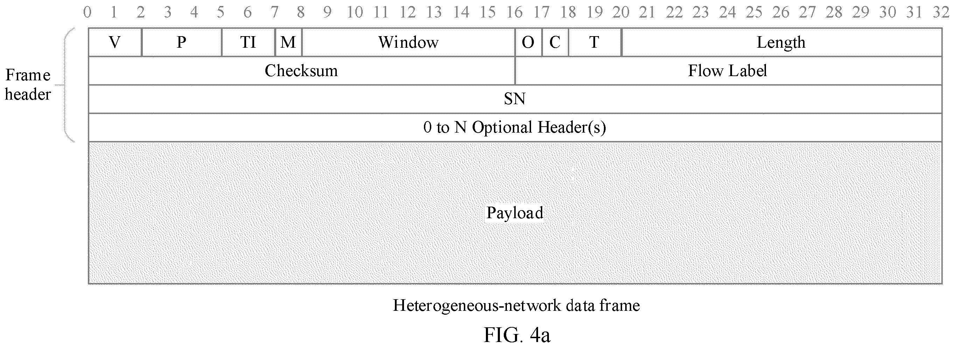

Next, a frame structure of the heterogeneous-network data frame is described by using an example with reference to FIG. 4a. Refer to FIG. 4a, the heterogeneous-network data frame includes fields such as a V (Version) field, a P (Priority) field, a TI (Transmit Index) field, an M (Merge) field, a Window field, an O (Optional) field, a C (Crowding) field, a T (Type) field, a Length field, a Checksum field, a Flow Label field, and an SN (Sequence Number) field.

The V field indicates a version number of the heterogeneous-network data frame, so that a protocol can be extended to be compatible with a new heterogeneous-network data frame and an old heterogeneous-network data frame. A length of the V field may be 2 bits. For example, an initial version may be 0, and after the version is extended, the version may be upgraded to 1.

The P field indicates a priority of the heterogeneous-network data frame, and a length of the P field is 3 bits. Therefore, a maximum of eight priorities may be included.

The TI field indicates a transmit index of the heterogeneous-network data frame. For example, a value of the TI field may be 0 when the heterogeneous-network data frame is sent for the first time, and the value of the TI field may increase progressively when the heterogeneous-network data frame is retransmitted. A length of the TI field may be 2 bits. Therefore, a maximum value of the TI field is 3. It may be understood that, when the heterogeneous-network data frame is retransmitted for the first time to the third time, that is, in a process in which the value of the TI field increases progressively from 1 to 3, time consumed for transmitting the heterogeneous-network data frame may be used to calculate round-trip time (round-trip time, RTT). After the value of the TI field increases progressively to 3, if the heterogeneous-network data frame is retransmitted again, the value of the TI field remains unchanged, and the time consumed for transmitting the heterogeneous-network data frame is no longer used to calculate the round-trip time (round-trip time, RTT). It may be understood that, compared with a 32-bit timestamp in TCP, use of the 2-bit TI field greatly reduces header overheads, thereby improving data transmission efficiency.

The M field is a merge indication, and indicates whether a current heterogeneous-network data frame is to be merged with a subsequent heterogeneous-network data frame. It may be understood that TCP is a stream protocol in a byte stream (stream) mode. In the byte stream mode, the sending device sends data in a form of data stream. In the data stream, pieces of data usually have a same size, and the receiving device continuously receives the data stream including the plurality of pieces of data. Therefore, the receiving device cannot identify a pause point of the data stream, and cannot identify a service segment. However, a data block mode may be used by using the M field in this application. In the data block mode, a service may be divided into a plurality of segments for sending, and each segment may include a plurality of pieces of data. The M field indicates whether the data is a last piece of data in the segment, so that an end of each segment can be indicated to the receiving device. In this way, the receiving device can identify the service segment. A length of the M field may be 1 bit. For example, if a value of the M field is 1, it indicates that the current heterogeneous-network data frame is to be merged with the subsequent heterogeneous-network data frame. In other words, the heterogeneous-network data frame is not the last piece of data in the service segment. If the value of the M field is 0, it indicates that the current heterogeneous-network data frame is not to be merged with the subsequent heterogeneous-network data frame. In other words, the heterogeneous-network data frame is the last piece of data in the service segment. Alternatively, if a value of the M field is 0, it indicates that the current heterogeneous-network data frame is to be merged with the subsequent heterogeneous-network data frame. In other words, the heterogeneous-network data frame is not the last piece of data in the service segment. If the value of the M field is 1, it indicates that the current heterogeneous-network data frame is not to be merged with the subsequent heterogeneous-network data frame. In other words, the heterogeneous-network data frame is the last piece of data in the service segment.

The Window field indicates a receive window length, and the receive window length may be obtained by using a quantity of heterogeneous-network data frames. A length of the Window field may be 8 bits. Window may include two window modes, for example, a first mode and a second mode. The first mode may be a coarse adjustment mode. The coarse adjustment mode may include a window scaling factor. The window scaling factor may be obtained through negotiation between the sending device and the receiving device. The second mode is a fine adjustment mode. The fine adjustment mode does not include a window scaling factor. A first bit in the 8 bits of the Window field may indicate the foregoing two modes. For example, if the first bit of the Window field is 0, it indicates that a current window mode is the first mode, and the last 7 bits of the Window field may indicate a basic length of a window. Next, the receive window length is obtained by multiplying the basic length of the window by the window scaling factor. If the first bit of the Window field is 1, it indicates that a current window mode is the second mode, and the last 7 bits of the Window field may indicate the receive window length. Alternatively, if the first bit of the Window field is 1, it indicates that a current window mode is the first mode. If the first bit of the Window field is 0, it indicates that a current window mode is the second mode. Compared with that in TCP in which the receive window length is indicated by using bytes, in this embodiment of this application, the receive window length is indicated by using 1 byte (namely, 8 bits). This can greatly reduce the header overheads, thereby improving the data transmission efficiency.

The O field indicates whether an extension header (Optional Header) exists. A quantity of extension headers may be 0 to N, and N is a positive integer. A length of each extension header is 32 bits. A length of the O field may be 1 bit. For example, if a value of the O field is 1, it indicates that the extension header exists. If the value of the O field is 0, it indicates that the extension header does not exist. Alternatively, if a value of the O field is 0, it indicates that the extension header exists. If the value of the O field is 1, it indicates that the extension header does not exist.

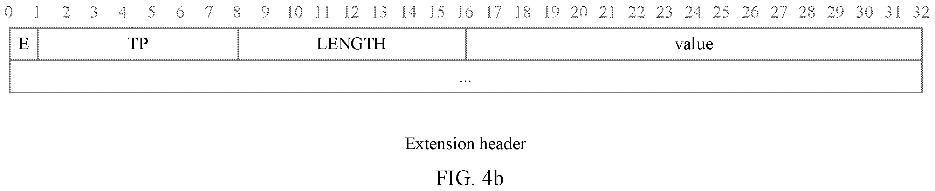

A format of the extension header is described by using an example with reference to FIG. 4b to FIG. 4g.

FIG. 4b shows a general format of an extension header. Refer to FIG. 4b. The extension header may include fields such as an E field, a TP field, a LENGTH field, and a value field.

The E field indicates whether the extension header ends. A length of the E field is 1 bit. For example, if a value of the E field is 1, it may indicate that a current extension header is a last extension header. If the value of the E field is 0, it may indicate that a current extension header is the last extension header.

The TP field indicates a type of a negotiation parameter in the extension header. The negotiation parameter may include but is not limited to a Flow Label parameter, an MSS parameter, a Scaling Factor parameter, a Service ID parameter, an SN parameter, and the like. A length of the TP field is 7 bits.

Flow Label indicates an allocated flow label. A length of Flow Label is 2 bytes. The flow label is determined by a server device, and the flow label is obtained through negotiation by using an extension header in a client device or the server device. If the server device carries a flow label with a value of 0, it indicates that there is no available flow label.

A manner of obtaining the flow label through negotiation may be described below.

The client device sends an initialization request. The initialization request may be carried in a heterogeneous-network data frame, and a Flow Label field in a header of the initialization request may be 0. After receiving the initialization request, the server device may send a synchronization request to the client device. The synchronization request may be carried in a heterogeneous-network data frame. The synchronization request includes an extension header, and the extension header may carry a recommended value of Flow Label. The Flow Label field in a header of the synchronization request may be 0. If the client device replies with ACK information, the ACK information may be carried in a heterogeneous-network data frame. The ACK information includes an extension header. The extension header carries an acknowledgment value. A Flow Label field in a header of the ACK information may be 0. In this case, Flow Label negotiation can be successfully completed. If the client device replies with NACK information, the NACK information may be carried in a heterogeneous-network data frame. The NACK information may be used to notify the server device that the recommended value of Flow Label carried in the extension header conflicts with Flow Label generated by the client device. In this case, a next round of Flow Label negotiation may be started. A Flow Label field in a header of the NACK information may be 0. After receiving the NACK information, the server device may resend a synchronization request to the client device, to start a new round of Flow Label negotiation.

MSS indicates a size of data that can be received by the sending device. A length of MSS is 2 bytes. No negotiation process is required for MSS, and each party may notify a peer end of a recommended value of MSS. After the peer end receives the value of MSS, the peer end may assemble a data frame based on the recommended value of MSS. For example, a local MSS calculation method may be: MSS=MTU-16. In some optional embodiments, if the extension header does not carry the negotiation parameter, MSS may be 1484 bytes by default, where 1484 may be obtained by MTU-16.

A value of Scaling Factor may be specified by the client device. After the server device receives the value of Scaling Factor and replies with a same response value, it may be considered that negotiation succeeds.

Service ID indicates an identification number of the service. Service ID is carried in a connection request initiated by the client device, to indicate the service to be connected. After the server device receives Service ID, if Service ID exists, connection negotiation may be further performed; or if Service ID does not exist, reset (RST) information may be sent. It may be understood that, in a connection establishment process, each party carries the Service ID parameter.

SN indicates a sequence number of the heterogeneous-network data frame. It may be understood that each party may select an initial value, and sends the initial value to the peer end during an initialization handshake. If an acknowledgment is received, it may be considered that negotiation succeeds.

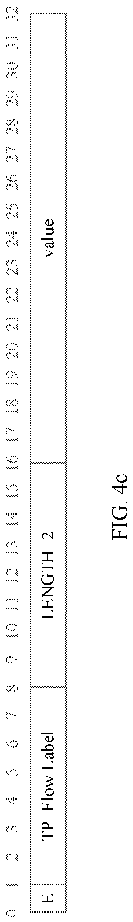

An example in which the negotiation parameter is Flow Label is used for description. FIG. 4c shows a format of an extension header in which the negotiation parameter is the Flow Label. Refer to FIG. 4c. TP=Flow Label indicates that the negotiation parameter carried in the current extension header is Flow Label, and LENGTH=2 indicates that a length of the value field is 2 bytes.

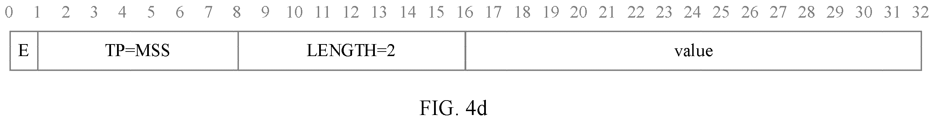

Next, an example in which the negotiation parameter is MSS is used for description. FIG. 4d shows a format of an extension header in which the negotiation parameter is MSS.

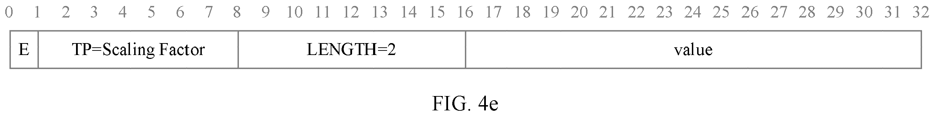

Next, an example in which the negotiation parameter is Scaling Factor is used for description. FIG. 4e shows a format of an extension header in which the negotiation parameter is MSS.

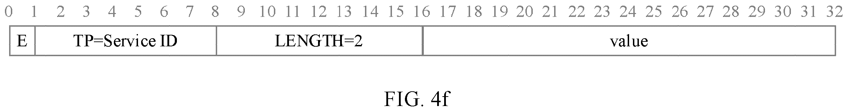

Next, an example in which the negotiation parameter is Service ID is used for description. FIG. 4f shows a format of an extension header in which the negotiation parameter is MSS.

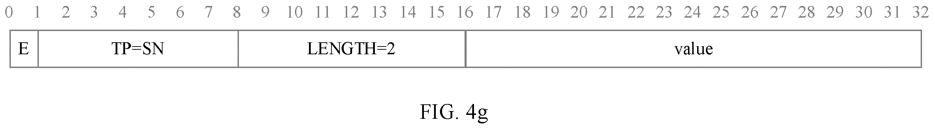

Next, an example in which the negotiation parameter is SN is used for description. FIG. 4g shows a format of an extension header in which the negotiation parameter is SN.

The LENGTH field indicates the length of the value field in a unit of byte. A length of the LENGTH field is 8 bits.

The Value field indicates a value of the negotiation parameter.

It may be understood that the foregoing extension header may appear in a connection establishment process and a connection disconnection process, and the foregoing extension header does not appear in a data transmission process. This can reduce header overheads of the heterogeneous-network data frame, thereby improving data transmission efficiency.

The C field indicates whether congestion exists. A length of the C field may be 1 bit. For example, if a value of the C field is 1, it indicates that congestion exists. If the value of the C field is 0, it indicates that congestion does not exist. Alternatively, if a value of the C field is 0, it indicates that congestion exists. If the value of the C field is 1, it indicates that congestion does not exist.

The T field indicates a type of the heterogeneous-network data frame. The type may include but is not limited to a type like initialization, a response, data, and an end. A length of the T field may be 3 bits.

The Length field indicates a length of a payload in the heterogeneous-network data frame. A length of the Length field may be 12 bits.

The Checksum field is used to perform a validation check on the heterogeneous-network data frame. A length of the Checksum field may be 16 bits. When values of Checksum are all 0s, it may be considered that there is no need to perform the check. It may be understood that, in addition to Checksum, the validation check may be performed in a manner like a cyclic redundancy check (Cyclic Redundancy Check, CRC). This is not specially limited in embodiments of this application.

The Flow Label field indicates an address of the receiving device. A length of the Flow Label field may be 16 bits. TCP is applicable to the Internet, and relates to IP route selection. A 5-tuple in TCP/IP is usually used for route selection, and header overheads of the 5-tuple are high. However, this embodiment of this application is applied to a local area network to resolve a communication problem in the local area network, and does not relate to an external network. Therefore, there is no route selection problem, and a function of the 5-tuple in TCP/IP can be implemented by using Flow Label. This can further reduce the header overheads, thereby improving the data transmission efficiency. In some optional embodiments, the heterogeneous-network data frame may alternatively be applied to a wide area network or the Internet. In this case, the heterogeneous-network data frame may be carried by a network layer like an IP layer, and a corresponding address may be determined by using both the Flow Label field and an IP address.

The SN field indicates a sequence number of the heterogeneous-network data frame. A length of the SN field may be 32 bits.

It may be understood that, in the conventional technology, a transport layer protocol frame header and a network layer protocol frame header occupy high header overheads of a packet. For example, a transport layer protocol is TCP and a network layer protocol is IPv4. A TCP frame header occupies 20 bytes, and an IPv4 frame header occupies 20 bytes. In other words, the transport layer protocol frame header and the network layer protocol frame header occupy 40 bytes in total. For example, a transport layer protocol is TCP and a network layer protocol is IPv6. A TCP frame header occupies 20 bytes, and an IPv6 frame header occupies 40 bytes. In other words, the transport layer protocol frame header and the network layer protocol frame header occupy 60 bytes in total. This greatly reduces data transmission efficiency. However, in this embodiment of this application, the heterogeneous-network data frame does not include the network layer protocol frame header, so that header overheads of the network layer protocol can be reduced. In addition, overheads of an entire frame header of the heterogeneous-network data frame are 12 bytes (namely, 96 bits), which are far less than header overheads of an existing transport layer protocol. Compared with the header overheads of the existing transport layer protocol and the header overheads of network layer protocol, the header overheads are greatly reduced. For example, compared with the 40-byte TCP and IPv4 header overheads, 28-byte header overheads of the heterogeneous-network data frame can be reduced. Compared with the 60-byte TCP and IPv6 header overheads, 48-byte header overheads of the heterogeneous-network data frame can be reduced. This can greatly reduce the header overheads, thereby improving the data transmission efficiency.

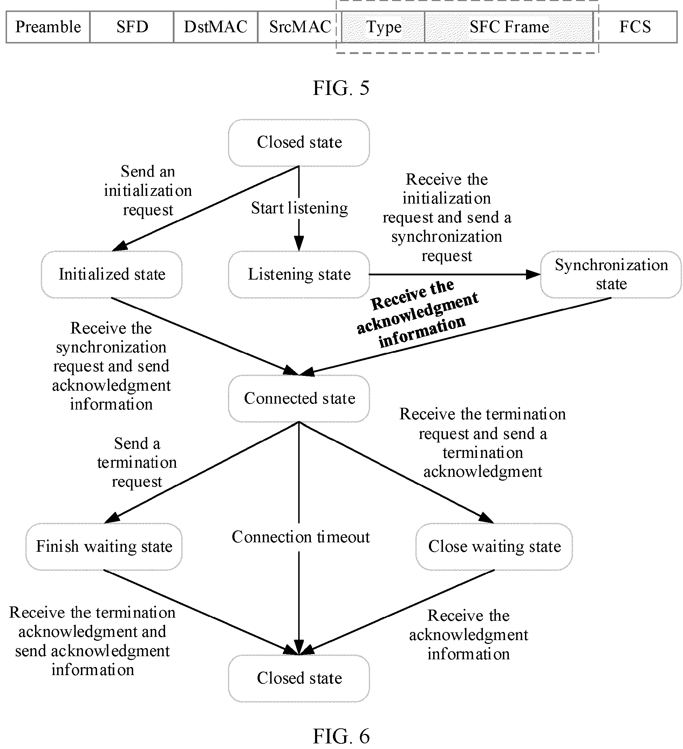

The heterogeneous-network data frame may be carried by a layer 2 (L2). For example, L2 is a MAC layer, and an L2 data frame is a MAC frame. FIG. 5 is a diagram of a format of the MAC frame. Refer to FIG. 5. The MAC frame includes fields such as a Preamble field, an SFD field, a DstMAC field, a SrcMAC field, a Type field, an SFC Frame field, and an FCS field.

The Preamble field indicates a preamble, and is used to enable an adapter of the receiving device to quickly adjust a clock rate when the MAC frame is received, so that the clock rate is the same as a clock rate of a sending device. A length of the Preamble field may be 7 bytes, and a value of the Preamble field alternates 1 and 0.

The SFD field indicates a start delimiter of the MAC frame. A length of the SFD field is 1 byte. The first 6 bits alternate 1 and 0, and the last two consecutive bits 1 are used to notify the adapter of the receiving device that "Frame information is coming. Get ready to receive the frame information. "

The DstMAC field indicates a destination address, and indicates a MAC address or a physical address of a network adapter that receives the MAC frame. A length of DstMAC is 6 bytes. It may be understood that, when receiving a MAC frame, the receiving device first checks whether a destination address of the MAC frame is the same as a physical address of a current adapter. If the destination address of the MAC frame is the same as the physical address of the current adapter, further processing is performed. If the destination address of the MAC frame is different from the physical address of the current adapter, the MAC frame is discarded.

The SrcMAC field indicates a source address, and indicates a MAC address or a physical address of a network adapter that sends the MAC frame. A length of SrcMAC is 6 bytes.

The Type field indicates a type of upper-layer data carried in the layer-2 data frame. There are many upper-layer protocols, and the Type field may indicate a specific upper-layer protocol to which the data is delivered for processing. A length of the Type field is 2 bytes. For example, if a value of the Type field is 0xABAB, it may indicate that the upper-layer data carried in the layer-2 data frame is the heterogeneous-network data frame. If the value of the Type field is 0x0800, it may indicate that the upper-layer data carried in the layer-2 data frame is an IP frame. It may be understood that 0xABAB and 0x0800 are merely examples for description, and do not constitute a limitation on embodiments of this application. In some embodiments, the heterogeneous-network data frame and the IP frame may alternatively be indicated by other values.

The SFC Frame field indicates a heterogeneous-network data frame. For a specific frame format of the heterogeneous-network data frame, refer to related descriptions in the embodiment shown in FIG. 4. Details are not described herein again. It may be understood that a minimum length of the SFC Frame field may be 46 bytes, and a maximum length, which may also be referred to as a maximum transmission unit, of the SFC Frame field may be 1500 bytes. When the length is less than 46 bytes, the length can be padded to 46 bytes.

The FCS field indicates a frame check sequence, and is used to check whether an error occurs in the MAC frame. A length of the FCS field is 4 bytes. It may be understood that the sending device calculates a cyclic redundancy check (Cyclic Redundancy Check, CRC) code of the MAC frame, and writes the cyclic redundancy check code into the FCS field. The receiving device recalculates the CRC, and compares the CRC with a CRC value in the FCS field. If the CRC is different from the CRC value in the FCS field, it indicates that a data loss or change occurs in a transmission process. In this case, the MAC frame needs to be retransmitted.

It may be understood that the heterogeneous-network data frame may be carried by another layer, for example, a layer 3 or a layer 4. This is not specially limited in embodiments of this application.

Then, state transitions of a device are described by using an example with reference to FIG. 6. Refer to FIG. 6. States of the device may include a closed state, an initialized state, a listening state, a synchronization state, a connected state, a finish waiting state, and a close waiting state. It may be understood that the closed state may be an initialized state of a client device and a server device. The client device may actively request to establish a connection, and the server device may passively respond. The client device and the server device each may be a sending device or a receiving device. When the client device serves as a sending device, the server device is a receiving device. Alternatively, when the client device serves as a receiving device, the server device is a sending device.

After creating a socket, the client device may invoke a connect interface, and may send an initialization request to the server device when the client device is in the closed state. In this way, the client device may enter the initialized state from the closed state. After creating a socket, the server device listens to the initialization request, and therefore may invoke a listen interface. In this way, the server device may switch from the closed state to the listening state, and start listening.

After detecting the initialization request in the listening state, if the server device agrees to establish the connection, the server device may send a synchronization request to the client device. In this way, the server device can enter the synchronization state from the listening state. If the server device does not agree to establish the connection, the server device may not reply with any information.

After the client device receives the synchronization request in the initialized state, if a parameter in the synchronization request is correct, the client device may send acknowledgment information (for example, an ACK) to the server device. In this way, the client device may enter the connected state from the initialized state. This means that a connection to the server device is successfully established, so that the client device can exchange data with the server device. If a parameter in the synchronization request is incorrect, negative acknowledgment information (for example, a NACK) may be sent to the server device. In this case, the state does not need to be switched, and a next round of negotiation with the server device is started.

After receiving the acknowledgment information in the synchronization state, the server device may enter the connected state from the synchronization state. This means that a connection to the client device is successfully established, so that the server device can exchange data with the client device. After receiving the negative acknowledgment information in the synchronization state, the server device may resend a synchronization request to the client device, so that a new round of negotiation with the client device can be started. In this case, the state of the server device is not switched.

When the client device and/or the server device are/is in the initialized state or the synchronization state, if the client device and/or the server device do/does not receive a response from each other, the client device and/or the server device may enter the closed state after preset duration. In this case, the connection fails to be established, and a corresponding resource is released.

It may be understood that either party (including the client device and the server device) may actively initiate disconnection. A manner of actively initiating disconnection may be notifying a peer end by using control information.

In some optional embodiments, either party may actively disconnect the connection after a heartbeat times out. In this case, the peer end does not need to be notified.

Next, the following describes an example of the manner of actively disconnecting the connection by notifying the peer end by using the control information.

When the client device is in the connected state, the client device may actively initiate disconnection. In this case, the client device may actively send a termination request to request disconnection. After sending the termination request, the client device may enter the finish waiting state from the connected state. After receiving the termination request in the connected state, the server device may send a termination acknowledgment to the client device. In this way, the server device may enter the close waiting state from the connected state. This means that the server device is ready for disconnection. After receiving the termination acknowledgment in the finish waiting state, the client device may send acknowledgment information to the server device. In this way, the client device may enter the closed state from the finish waiting state. This means that the connection is successfully disconnected. After receiving the acknowledgment information in the close waiting state, the server device may enter the closed state from the close waiting state. This means that the connection is successfully disconnected.

Alternatively,
when the server device is in the connected state, the server device may actively initiate disconnection. In this case, the server device may actively send a termination request to request disconnection. After sending the termination request, the server device may enter the finish waiting state from the connected state. After receiving the termination request in the connected state, the client device may send a termination acknowledgment to the server device. In this way, the client device may enter the close waiting state from the connected state. This means that the client device is ready for disconnection. After receiving the termination acknowledgment in the finish waiting state, the server device may send acknowledgment information to the client device. In this way, the server device may enter the closed state from the finish waiting state. This means that the connection is successfully disconnected. After receiving the acknowledgment information in the close waiting state, the client device may enter the closed state from the close waiting state. This means that the connection is successfully disconnected.

It may be understood that, when the client device and/or the server device are/is in the finish waiting state or the close waiting state, if no response is received from the peer end, the client device and/or the server device may switch to the closed state after preset duration. In this case, the connection is successfully disconnected, and a corresponding resource is released.

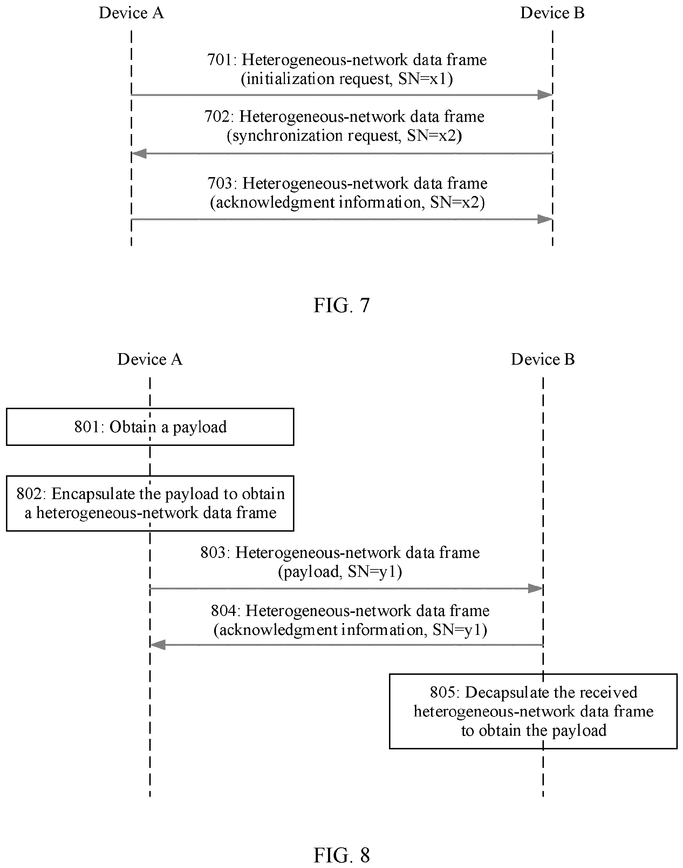

FIG. 7 is a schematic flowchart of an embodiment of a communication method according to this application. The communication method may be applied to any two devices (for example, a device A and a device B). The device A may be a client device, and the device B may be a server device. Alternatively, the device A may be a server device, and the device B may be a client device. The following uses an example in which the device A is a client device and the device B is a server device for description. The following steps are specifically included.

Step 701: The device A sends an initialization request to the device B. Correspondingly, the device B receives the initialization request sent by the device A.

Specifically, the device A in a closed state may send the initialization request to the device B, to start a process of establishing a connection to the device B. It may be understood that, after the device A sends the initialization request to the device B, the device A may enter an initialized state from the closed state.

The initialization request may be carried in a heterogeneous-network data frame. For example, a T field in the heterogeneous-network data frame may indicate that the heterogeneous-network data frame sent this time carries the initialization request. An SN field in the heterogeneous-network data frame may indicate a sequence number of the heterogeneous-network data frame sent this time. For example, the sequence number of the heterogeneous-network data frame that carries the initialization request may be x1, and x1 may be a 32-bit binary number.

Step 702: The device B sends a synchronization request to the device A. Correspondingly, the device A receives the synchronization request sent by the device B.

Specifically, the device B in a listening state may perform listening. After the device B detects that the device A sends the initialization request, the device B may send the synchronization request to the device A. It may be understood that, after the device B sends the synchronization request to the device A, the device B may enter a synchronization state from the listening state.

The synchronization request may also be carried in a heterogeneous-network data frame. For example, a T field in the heterogeneous-network data frame may indicate that the heterogeneous-network data frame sent this time carries the synchronization request. For example, a sequence number of the heterogeneous-network data frame that carries the synchronization request may be x2, and x2 may be a 32-bit binary number.

Step 703: The device A sends acknowledgment information to the device B. Correspondingly, the device B receives the acknowledgment information sent by the device A.

Specifically, after receiving the synchronization request sent by the device B, the device A in the initialized state may send the acknowledgment information to the device B. It may be understood that, after the device A sends the acknowledgment information to the device B, the device A may enter a connected state from the initialized state. In other words, the device A successfully establishes a connection to the device B.

The acknowledgment information may also be carried in a heterogeneous-network data frame. For example, a T field in the heterogeneous-network data frame may indicate that the heterogeneous-network data frame sent this time carries the acknowledgment information. In addition, to enable the device B to identify that the acknowledgment information is an acknowledgment for the synchronization request, a value of an SN field in the heterogeneous-network data frame that carries the synchronization request is the same as a value of an SN in the heterogeneous-network data frame that carries the acknowledgment information. In other words, a sequence number of the heterogeneous-network data frame that carries the synchronization request is the same as a sequence number of the heterogeneous-network data frame that carries the acknowledgment information.

In some optional embodiments, in a process of establishing the connection between the device A and the device B, a congestion control algorithm may be further obtained through negotiation. In this way, the congestion control algorithm may be obtained through dynamic negotiation based on a link between different devices, so that different congestion control algorithms can be used in different application scenarios. This avoids a case in which a throughput decreases because a same congestion control algorithm is used in different application scenarios.

It may be understood that, for a specific manner of communication between the device A serving as a server device and the device B serving as a client device, refer to the manner of communication between the device A serving as a client device and the device B serving as a server. Details are not described herein again.

The foregoing describes a process of establishing a connection between two devices by using FIG. 7 as an example. The following describes a process of data transmission between two devices by using FIG. 8 as an example. The device A and the device B shown in FIG. 7 are still used as an example. After the connection is successfully established between the device A and the device B, data transmission may be performed. After step 703, the following steps are specifically included.

Step 801: The device A obtains a payload.

Specifically, the payload may be service data, and the service data may be data generated by an application layer.

Step 802: The device A encapsulates the payload to obtain a heterogeneous-network data frame.

Specifically, for a specific manner of encapsulating the payload, refer to the frame format shown in FIG. 4a. Details are not described herein again.

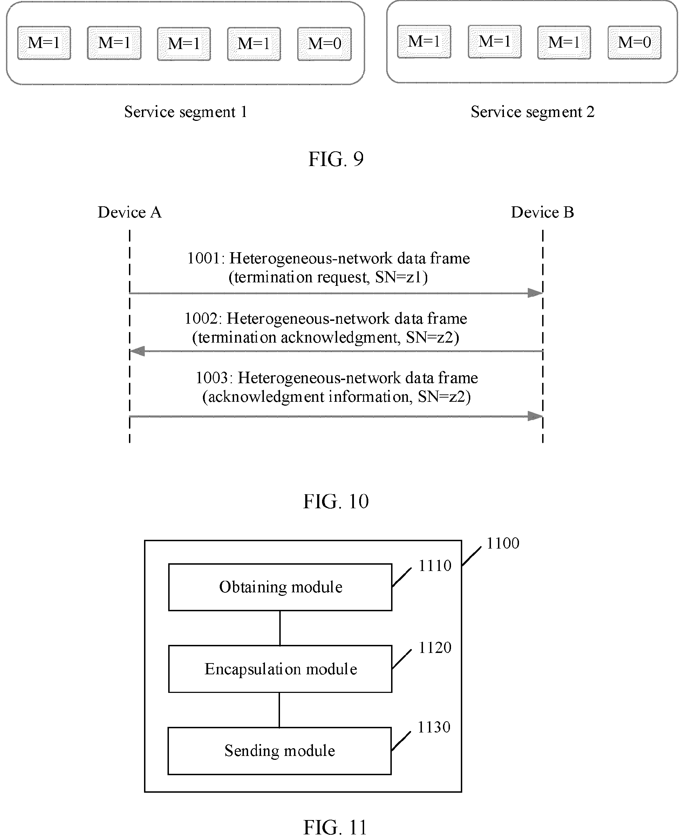

It may be understood that a current data transmission mode is usually a byte stream (stream) mode. In the byte stream mode, a sending device sends data in a form of data stream. Correspondingly, a receiving device receives the data in the form of data stream. Therefore, the receiving device cannot identify a pause point of a current service. When the receiving device needs to query the pause point of the service, the receiving device needs to query the entire service. This reduces service efficiency. However, in this embodiment of this application, an M field in the heterogeneous-network data frame may indicate whether there is another heterogeneous-network data frame following the current heterogeneous-network data frame. The M field may indicate the pause point of the service, so that the sending device can divide the service into segments, and the receiving device can learn of the segments of the service. This improves service identification and receiving efficiency. For example, as shown in FIG. 9, a segment of a service includes a plurality of heterogeneous-network data frames. An M field in a heterogeneous-network data frame that is sent first may be set to 1, to indicate that there is a heterogeneous-network data frame following the heterogeneous-network data frame. An M field in a last heterogeneous-network data frame may be set to 0, to indicate that there is no heterogeneous-network data frame following the heterogeneous-network data frame. In this way, an objective of segment division of the service can be achieved. Optionally, in a segment of a service, an M field in a heterogeneous-network data frame that is sent first may alternatively be set to 0, to indicate that there is a heterogeneous-network data frame following the heterogeneous-network data frame. An M field in a last heterogeneous-network data frame is set to 1, to indicate that there is no heterogeneous-network data frame following the heterogeneous-network data frame. In this way, an objective of segment division of the service can be achieved. A manner of setting the M field is not specially limited in this application.

Step 803: The device A sends the heterogeneous-network data frame to the device B. Correspondingly, the device B receives the heterogeneous-network data frame sent by the device A.

Specifically, after obtaining the heterogeneous-network data frame, the device A may send the heterogeneous-network data frame to the device B. A T field in the heterogeneous-network data frame may indicate that the heterogeneous-network data frame sent this time carries a payload. An SN field in the heterogeneous-network data frame may indicate a sequence number of the heterogeneous-network data frame sent this time. For example, the sequence number of the heterogeneous-network data frame that carries the payload may be y1, and y1 may be a 32-bit binary number.

It may be understood that, when the device A sends the heterogeneous-network data frame to the device B, the device B may also send a heterogeneous-network data frame to the device A, and correspondingly, the device A receives the heterogeneous-network data frame sent by the device B. For a specific implementation in which the device B sends the heterogeneous-network data frame, refer to the specific implementation in which the device A sends the heterogeneous-network data frame. Details are not described herein again.

Step 804: The device B sends acknowledgment information to the device A. Correspondingly, the device A receives the acknowledgment information sent by the device B.

Specifically, after receiving any heterogeneous-network data frame sent by the device A, the device B may send the acknowledgment information to the device A. The acknowledgment information is an acknowledgment for the received heterogeneous-network data frame. To enable the device A to identify that the acknowledgment information is an acknowledgment for the heterogeneous-network data frame, a value of an SN field in the heterogeneous-network data frame that carries the acknowledgment information is the same as a value of SN in the heterogeneous-network data frame sent by the device A. For example, SN in the heterogeneous-network data frame that carries the acknowledgment information is set to y1.

In some optional embodiments, to reduce network congestion, the device B may feed back acknowledgment information at a time for a plurality of heterogeneous-network data frames sent by the device A. In other words, after receiving any heterogeneous-network data frame sent by the device A, the device B generates acknowledgment information, but does not send the acknowledgment information. After a preset quantity of pieces of acknowledgment information is reached, the preset quantity of pieces of acknowledgment information may be fed back to the device A at a time. In this way, a quantity of times of sending the acknowledgment information can be reduced, thereby reducing network congestion. A value of the preset quantity may be 16, or may be another value. This is not specially limited in embodiments of this application.

Step 805: The device B decapsulates the received heterogeneous-network data frame to obtain the payload.

Specifically, after receiving the heterogeneous-network data frame, the device B may decapsulate the heterogeneous-network data frame to obtain the payload in the heterogeneous-network data frame. A decapsulation process is to remove a frame header of the heterogeneous-network data frame to obtain the payload. After obtaining the payload, the device B may send the payload to an application layer, so that service interaction between the device B and the device A can be completed.

It may be understood that, for a specific process in which the device A receives the heterogeneous-network data frame sent by the device B, refer to the foregoing process in which the device B receives the heterogeneous-network data frame sent by the device A. Details are not described herein again.

The foregoing describes the process of data transmission between two devices by using FIG. 8 and FIG. 9 as an example. The following describes a process of disconnection between two devices by using FIG. 10 as an example. The device A and the device B shown in FIG. 7 are still used as an example. The following steps are specifically included.

Step 1001: The device A sends a termination request to the device B. Correspondingly, the device B receives the termination request sent by the device.

Specifically, the device A in a connected state may send the termination request to the device B, to initiate a disconnection process. It may be understood that, after the device A sends the termination request to the device B, the device A may enter a finish waiting state from the connected state.

The termination request may also be carried in a heterogeneous-network data frame. For example, a T field in the heterogeneous-network data frame may indicate that the heterogeneous-network data frame sent this time carries the termination request. An SN field in the heterogeneous-network data frame may indicate a sequence number of the heterogeneous-network data frame sent this time. For example, the sequence number of the heterogeneous-network data frame that carries the termination request may be z1, and z1 may be a 32-bit binary number.

Step 1002: The device B sends a termination acknowledgment to the device A. Correspondingly, the device A receives the termination acknowledgment sent by the device B.

Specifically, after the device B receives the termination request sent by the device A, if the device B allows termination of a current communication task, that is, allows disconnection, the device B may send the termination acknowledgment to the device A, to acknowledge the current disconnection for the device A. If the device B does not allow termination of the current communication task, that is, does not allow disconnection, the device B may not send the termination acknowledgment to the device A. It may be understood that, after the device B sends the termination acknowledgment to the device A, the device B may enter the close waiting state from the connected state.

The termination acknowledgment may also be carried in a heterogeneous-network data frame. For example, a T field in the heterogeneous-network data frame may indicate that the heterogeneous-network data frame sent this time carries the termination acknowledgment. An SN field in the heterogeneous-network data frame may indicate a sequence number of the heterogeneous-network data frame sent this time. For example, the sequence number of the heterogeneous-network data frame that carries the termination acknowledgment may be z2, and z2 may be a 32-bit binary number.

Step 1003: The device A sends acknowledgment information to the device B. Correspondingly, the device B receives the acknowledgment information sent by the device A.

Specifically, after receiving the termination acknowledgment sent by the device B, the device A may send the acknowledgment information to the device B. The acknowledgment information is used to acknowledge the termination acknowledgment sent by the device B, so that a connection between the device A and the device B can be disconnected. It may be understood that, after the device A sends the acknowledgment information to the device B, the device A may enter a closed state from a finish waiting state.

The acknowledgment information may also be carried in a heterogeneous-network data frame. For example, a T field in the heterogeneous-network data frame may indicate that the heterogeneous-network data frame sent this time carries the acknowledgment information. To identify that the acknowledgment information is an acknowledgment for the termination acknowledgment, a sequence number carried in the heterogeneous-network data frame that carries the acknowledgment information is consistent with a sequence number carried in the heterogeneous-network data frame that carries the termination acknowledgment.

Correspondingly, after receiving the acknowledgment information sent by the device A, the device B disconnects the connection between the device B and the device A. After the device B receives the acknowledgment information sent by the device A, the device B may enter the closed state from the close waiting state.

It may be understood that the embodiment shown in FIG. 10 may be performed after step 703, or may be performed after step 803. In other words, the connection may be disconnected after the connection is established, or the connection may be disconnected after data transmission is completed. This is not specially limited in embodiments of this application.

It should be noted that the foregoing shows only an example in which the device A actively initiates the disconnection process, but does not constitute a limitation on embodiments of this application. In some embodiments, the device B may alternatively actively initiate the disconnection process. For example, the device B sends a termination request to the device A.

In some optional embodiments, if the device A or the device B in the connected state detects that the connection times out, the device A or the device B may enter the closed state from the connected state. In this way, the connection can be disconnected. During specific implementation, the device A or the device B may detect, by detecting a heartbeat packet, whether the connection times out. For example, if no heartbeat packet is detected within preset duration, it may be considered that the connection times out, and in this case, the connection may be disconnected.

FIG. 11 is a diagram of a structure of an embodiment of a sending device according to this application. As shown in FIG. 11, the sending device 1100 may include an obtaining module 1110, an encapsulation module 1120, and a sending module 1130.

The obtaining module 1110 is configured to obtain a payload of an application layer.

The encapsulation module 1120 is configured to encapsulate the payload of the application layer to obtain a heterogeneous-network data frame. The heterogeneous-network data frame does not include a network layer protocol frame header, and a length of a frame header of the heterogeneous-network data frame is less than a length of a transport layer protocol frame header.

The sending module 1130 is configured to send the heterogeneous-network data frame to a receiving device in a heterogeneous network.

In a possible implementation, the frame header of the heterogeneous-network data frame includes a window length indication. The window length indication indicates a receive window length, and a length of the window length indication is 8 bits.

In a possible implementation, a first bit of the window length indication indicates whether a window scaling factor exists, and last 7 bits of the window length indication indicate a basic length of a receive window.

In a possible implementation, if the first bit of the window length indication indicates that the window scaling factor exists, the receive window length is determined based on the basic length of the receive window and the window scaling factor. The window scaling factor is obtained through negotiation between the sending device and the receiving device.

In a possible implementation, the frame header of the heterogeneous-network data frame includes at least one of the following:
a merge indication, where the merge indication indicates whether a current heterogeneous-network data frame is to be merged with a subsequent heterogeneous-network data frame, and a length of the merge indication is 1 bit;
a flow label, where the flow label indicates an address of the receiving device, and a length of the flow label is 16 bits; and
a transmit index indication, where the transmit index indication indicates a quantity of times of transmitting or retransmitting the heterogeneous-network data frame, and a length of the transmit index indication is 2 bits.

In a possible implementation, the sending module 1130 is specifically configured to:
send a connection request to the receiving device, where the connection request is carried in the heterogeneous-network data frame, and the connection request is used to request to establish a connection to the receiving device; and/or
send a termination request to the receiving device, where the termination request is carried in the heterogeneous-network data frame, and the termination request is used to initiate disconnection from the receiving device.

In a possible implementation, the sending device 1100 further includes:
a negotiation module, configured to: in a process of establishing the connection to the receiving device, obtain a congestion control algorithm through negotiation with the receiving device.

In a possible implementation, the negotiation module is further configured to:
in the process of establishing the connection to the sending device, perform session negotiation with the sending device, where a parameter for session negotiation is carried in an extension header of the heterogeneous-network data frame.

In a possible implementation, the heterogeneous network includes one or more of wireless fidelity Wi-Fi, Bluetooth, Bluetooth low energy, and the Ethernet.

In a possible implementation, the sending device 1100 further includes:
a receiving module, configured to receive acknowledgment information sent by the receiving device, where the acknowledgment information is used to acknowledge one or more heterogeneous-network data frames sent by the sending device.

The sending device 1100 provided in the embodiment shown in FIG. 11 may be configured to perform the technical solutions in the method embodiments shown in FIG. 1 to FIG. 10 in this application. For an implementation principle and a technical effect of the sending device 1100, refer to related descriptions in the method embodiments.

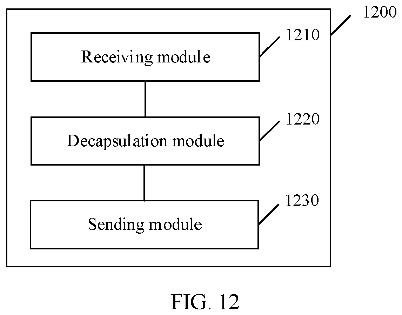

FIG. 12 is a diagram of a structure of an embodiment of a receiving device according to this application. As shown in FIG. 12, the receiving device 1200 may include a receiving module 1210, a decapsulation module 1220, and a sending module 1230.

The receiving module 1210 is configured to receive a heterogeneous-network data frame in a heterogeneous network. The heterogeneous-network data frame does not include a network layer protocol frame header, and a length of a frame header of the heterogeneous-network data frame is less than a length of a transport layer protocol frame header.

The decapsulation module 1220 is configured to decapsulate the heterogeneous-network data frame to obtain a payload.

The sending module 1230 is configured to send the payload to an application layer of the receiving device.

In a possible implementation, the sending module 1230 is further configured to:
send acknowledgment information to a sending device, where the acknowledgment information is used to acknowledge one or more heterogeneous-network data frames sent by the sending device.

In a possible implementation, the receiving module 1210 is further configured to:
receive a connection request sent by the sending device, and establish a connection to the sending device based on the connection request, where the connection request is carried in a heterogeneous-network data frame; and/or
send a termination request to the sending device, where the termination request is carried in a heterogeneous-network data frame, and the termination request is used to initiate disconnection from the sending device.

In a possible implementation, the receiving device 1200 further includes:
a negotiation module, configured to: in a process of establishing the connection to the sending device, obtain a congestion control algorithm through negotiation with the sending device.

In a possible implementation, the negotiation module is further configured to:
in the process of establishing the connection to the sending device, perform session negotiation with the sending device, where a parameter for session negotiation is carried in an extension header of the heterogeneous-network data frame.

In a possible implementation, the heterogeneous network includes one or more of wireless fidelity Wi-Fi, Bluetooth, Bluetooth low energy, and the Ethernet.

The receiving device 1200 provided in the embodiment shown in FIG. 12 may be configured to perform the technical solutions in the method embodiments shown in FIG. 1 to FIG. 10 in this application. For an implementation principle and a technical effect of the receiving device 1200, refer to related descriptions in the method embodiments.

It should be understood that division into the modules of the sending device shown in FIG. 11 and the modules of the receiving device shown in FIG. 12 is merely logical function division. During actual implementation, all or some of the modules may be integrated into one physical entity, or may be physically separated. In addition, the modules may be all implemented in a form of software invoking processing elements; or the modules may be all implemented in a form of hardware; or some modules may be implemented in a form of software invoking processing elements, and some modules may be implemented in a form of hardware. For example, a detection module may be an independently disposed processing element, or may be integrated in one chip of an electronic device for implementation. Implementations of other modules are similar. In addition, all or some of these modules may be integrated together, or may be implemented independently. In an implementation process, steps in the foregoing methods or the foregoing modules can be implemented by using a hardware integrated logical circuit in the processing element, or by using instructions in a form of software.

For example, the foregoing modules may be one or more integrated circuits configured to implement the foregoing method, for example, one or more application-specific integrated circuits (Application-Specific Integrated Circuits, ASICs for short), or one or more microprocessors (Digital Signal Processors, DSPs for short) or one or more field programmable gate arrays (Field Programmable Gate Arrays, FPGAs for short) and the like. For another example, these modules may be integrated together and implemented in a form of system on a chip (System on a Chip, SOC for short).

In the foregoing embodiments, related processors may include, for example, a CPU, a DSP, a microcontroller, or a digital signal processor, and may further include a GPU, an embedded neural-network processing unit (Neural-network Process Unit, NPU for short), and an image signal processor (Image Signal Processor, ISP for short). The processors may further include a necessary hardware accelerator or logic processing hardware circuit, for example, an ASIC, or one or more integrated circuits configured to control program execution of the technical solutions of this application. In addition, the processors may have a function of operating one or more software programs, and the software programs may be stored in a storage medium.

An embodiment of this application further provides a computer-readable storage medium. The computer-readable storage medium stores a computer program. When the computer program is run on a computer, the computer is enabled to perform the methods provided in the embodiments shown in FIG. 1 to FIG. 10 in this application.

An embodiment of this application further provides a computer program product. The computer program product includes a computer program. When the computer program is run on a computer, the computer is enabled to perform the methods provided in the embodiments shown in FIG. 1 to FIG. 10 in this application.

In embodiments of this application, "at least one" means one or more, and "a plurality of" means two or more. "And/or" describes an association relationship between the associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following" and similar expressions mean any combination of these terms, including any combination of single or plural terms. For example, at least one of a, b, or c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by a combination of electronic hardware, computer software, and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of software functional unit and sold or used as an independent product, the function may be stored on a computer-readable storage medium. Based on such an understanding, the technical solutions of this application essentially, or the part contributing to the conventional technology, or some of the technical solutions may be implemented in a form of software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (Read-Only Memory, ROM for short), a random access memory (Random Access Memory, RAM for short), a magnetic disk, or an optical disc.

The foregoing descriptions are merely specific implementations of embodiments of this application. Any variation or replacement readily figured out by a person skilled in the art within the technical scope disclosed in this application shall fall within the protection scope in embodiments of this application. Therefore, the protection scope of this application shall be subject to the protection scope of the claims.

## Claims

1. A communication method, applied to a sending device, wherein the method comprises:
obtaining (801) a payload of an application layer;
encapsulating (802) the payload of the application layer to obtain a heterogeneous-network data frame, wherein the heterogeneous-network data frame does not comprise a network layer protocol frame header, and a length of a frame header of the heterogeneous-network data frame is less than a length of a transport layer protocol frame header; and
sending (803) the heterogeneous-network data frame to a receiving device in a heterogeneous network;
wherein the method further comprises:
sending a connection request to the receiving device, wherein the connection request is carried in the heterogeneous-network data frame, and the connection request is used to request to establish a connection to the receiving device; and/or
sending a termination request to the receiving device, wherein the termination request is carried in the heterogeneous-network data frame, and the termination request is used to initiate disconnection from the receiving device.

2. The method according to claim 1, wherein the frame header of the heterogeneous-network data frame comprises a window length indication, the window length indication indicates a receive window length, and a length of the window length indication is 8 bits.

3. The method according to claim 2, wherein a first bit of the window length indication indicates whether a window scaling factor exists, and last 7 bits of the window length indication indicate a basic length of a receive window.

4. The method according to claim 3, wherein if the first bit of the window length indication indicates that the window scaling factor exists, the receive window length is determined based on the basic length of the receive window and the window scaling factor, wherein the window scaling factor is obtained through negotiation between the sending device and the receiving device.

5. The method according to claim 1, wherein the frame header of the heterogeneous-network data frame comprises at least one of the following:
a merge indication, wherein the merge indication indicates whether a current heterogeneous-network data frame is to be merged with a subsequent heterogeneous-network data frame, and a length of the merge indication is 1 bit;
a flow label, wherein the flow label indicates an address of the receiving device, and a length of the flow label is 16 bits; and
a transmit index indication, wherein the transmit index indication indicates a quantity of times of transmitting or retransmitting the heterogeneous-network data frame, and a length of the transmit index indication is 2 bits.

6. The method according to any one of claims 1 to 5, wherein after the sending the heterogeneous-network data frame to a receiving device in a heterogeneous network, the method further comprises:
receiving acknowledgment information sent by the receiving device, wherein the acknowledgment information is used to acknowledge one or more heterogeneous-network data frames sent by the sending device.

7. A communication method, applied to a receiving device, wherein the method comprises:
receiving (803) a heterogeneous-network data frame in a heterogeneous network, wherein the heterogeneous-network data frame does not comprise a network layer protocol frame header, and a length of a frame header of the heterogeneous-network data frame is less than a length of a transport layer protocol frame header;
decapsulating (805) the heterogeneous-network data frame to obtain a payload; and
sending the payload to an application layer of the receiving device;
wherein before the receiving (803) a heterogeneous-network data frame in a heterogeneous network, the method further comprises:
receiving a connection request sent by the sending device, and establishing a connection to the sending device based on the connection request, wherein the connection request is carried in a heterogeneous-network data frame; and/or
sending a termination request to the sending device, wherein the termination request is carried in a heterogeneous-network data frame, and the termination request is used to initiate disconnection from the sending device.

8. The method according to claim 7, wherein after the receiving (803) a heterogeneous-network data frame in a heterogeneous network, the method further comprises:
sending (804) acknowledgment information to a sending device, wherein the acknowledgment information is used to acknowledge one or more heterogeneous-network data frames sent by the sending device.

9. A sending device, comprising a processor and a memory, wherein the memory is configured to store a computer program, and the processor is configured to run the computer program for the sending device to implement the communication method according to any one of claims 1 to 6.

10. A receiving device, comprising a processor and a memory, wherein the memory is configured to store a computer program, and the processor is configured to run the computer program for the receiving device to implement the communication method according to any one of claims 7 to 8.

11. A communication system, comprising the sending device according to claim 9 and the receiving device according to claim 10.

12. A computer program, wherein when the computer program is run on a processor of a sending device, causes the sending device to perform the communication method according to claims 1 to 6.

13. A computer program, wherein when the computer program is run on a processor of a receiving device, causes the receiving device to perform the communication method according to claims 7 to 8.

14. A computer-readable storage medium, wherein the computer-readable storage medium stores a computer program, and when the computer program is run on a computer, the communication method according to any one of claims 1 to 6 is implemented.

15. A computer-readable storage medium, wherein the computer-readable storage medium stores a computer program, and when the computer program is run on a computer, the communication method according to any one of claims 7 to 8 is implemented.

## Patentansprüche

1. Kommunikationsverfahren, das in einer Sendevorrichtung angewandt wird, wobei das Verfahren umfasst:
Erhalten (801) von Nutzdaten einer Anwendungsschicht;
Einkapseln (802) der Nutzdaten der Anwendungsschicht, um einen Datenframe eines heterogenen Netzwerks zu erhalten, wobei der Datenframe des heterogenen Netzwerks keine Framekopfzeile eines Vermittlungsschichtprotokolls umfasst und wobei eine Länge einer Framekopfzeile des Datenframes des heterogenen Netzwerks kürzer als eine Länge einer Framekopfzeile eines Transportschichtprotokolls ist; und
Senden (803) des Datenframes des heterogenen Netzwerks an eine Empfangsvorrichtung in einem heterogenen Netzwerk;
wobei das Verfahren ferner umfasst:
Senden einer Verbindungsanforderung an die Empfangsvorrichtung, wobei die Verbindungsanforderung in dem Datenframe des heterogenen Netzwerks mitgeführt wird und wobei die Verbindungsanforderung verwendet wird, um ein Einrichten einer Verbindung zu der Empfangsvorrichtung anzufordern; und/oder
Senden einer Beendigungsanforderung an die Empfangsvorrichtung, wobei die Beendigungsanforderung in dem Datenframe des heterogenen Netzwerks mitgeführt wird und wobei die Beendigungsanforderung verwendet wird, um eine Trennung von der Empfangsvorrichtung zu initiieren.

2. Verfahren nach Anspruch 1, wobei die Framekopfzeile des Datenframes des heterogenen Netzwerks eine Fensterlängenanzeige umfasst, wobei die Fensterlängenanzeige eine Empfangsfensterlänge anzeigt und wobei eine Länge der Fensterlängenanzeige 8 Bits beträgt.

3. Verfahren nach Anspruch 2, wobei ein erstes Bit der Fensterlängenanzeige anzeigt, ob ein Fensterskalierungsfaktor existiert, und wobei die letzten 7 Bits der Fensterlängenanzeige eine Basislänge eines Empfangsfensters anzeigen.

4. Verfahren nach Anspruch 3, wobei, wenn das erste Bit der Fensterlängenanzeige anzeigt, dass der Fensterskalierungsfaktor existiert, die Empfangsfensterlänge basierend auf der Basislänge des Empfangsfensters und dem Fensterskalierungsfaktor ermittelt wird, wobei der Fensterskalierungsfaktor durch eine Verhandlung zwischen der Sendevorrichtung und der Empfangsvorrichtung erhalten wird.

5. Verfahren nach Anspruch 1, wobei die Framekopfzeile des Datenframes des heterogenen Netzwerks mindestens eine der folgenden Informationen umfasst:
eine Zusammenführungsanzeige, wobei die Zusammenführungsanzeige anzeigt, ob ein aktueller Datenframe des heterogenen Netzwerks mit einem nachfolgenden Datenframe des heterogenen Netzwerks zusammengeführt werden muss, und wobei eine Länge der Zusammenführungsanzeige 1 Bit beträgt;
eine Datenstromkennzeichnung, wobei die Datenstromkennzeichnung eine Adresse der Empfangsvorrichtung anzeigt und wobei eine Länge der Datenstromkennzeichnung 16 Bits beträgt; und
eine Übertragungsindexanzeige, wobei die Übertragungsindexanzeige eine Häufigkeit eines Übertragens oder erneuten Übertragens des Datenframes des heterogenen Netzwerks anzeigt und wobei eine Länge der Übertragungsindexanzeige 2 Bits beträgt.

6. Verfahren nach einem der Ansprüche 1 bis 5, wobei das Verfahren nach dem Senden des Datenframes des heterogenen Netzwerks an eine Empfangsvorrichtung in einem heterogenen Netzwerk ferner umfasst:
Empfangen von Bestätigungsinformationen, die von der Empfangsvorrichtung gesendet werden, wobei die Bestätigungsinformationen verwendet werden, um einen oder mehrere Datenframes des heterogenen Netzwerks zu bestätigen, die von der Sendevorrichtung gesendet werden.

7. Kommunikationsverfahren, das in einer Empfangsvorrichtung angewandt wird, wobei das Verfahren umfasst:
Empfangen (803) eines Datenframes eines heterogenen Netzwerks in einem heterogenen Netzwerk, wobei der Datenframe des heterogenen Netzwerks keine Framekopfzeile eines Vermittlungsschichtprotokolls umfasst und wobei eine Länge einer Framekopfzeile des Datenframes des heterogenen Netzwerks kürzer als eine Länge einer Framekopfzeile eines Transportschichtprotokolls ist;
Entkapseln (805) des Datenframes des heterogenen Netzwerks, um Nutzdaten zu erhalten; und
Senden der Nutzdaten an eine Anwendungsschicht der Empfangsvorrichtung;
wobei das Verfahren vor dem Empfangen (803) eines Datenframes eines heterogenen Netzwerks in einem heterogenen Netzwerk ferner umfasst:
Empfangen einer Verbindungsanforderung, die von der Sendevorrichtung gesendet wird, und Einrichten einer Verbindung zu der Sendevorrichtung basierend auf der Verbindungsanforderung, wobei die Verbindungsanforderung in einem Datenframe eines heterogenen Netzwerks mitgeführt wird; und/oder
Senden einer Beendigungsanforderung an die Sendevorrichtung, wobei die Beendigungsanforderung in einem Datenframe eines heterogenen Netzwerks mitgeführt wird und wobei die Beendigungsanforderung verwendet wird, um eine Trennung von der Sendevorrichtung zu initiieren.

8. Verfahren nach Anspruch 7, wobei das Verfahren nach dem Empfangen (803) eines Datenframes eines heterogenen Netzwerks in einem heterogenen Netzwerk ferner umfasst:
Senden (804) von Bestätigungsinformationen an eine Sendevorrichtung, wobei die Bestätigungsinformationen verwendet werden, um einen oder mehrere Datenframes des heterogenen Netzwerks zu bestätigen, die von der Sendevorrichtung gesendet werden.

9. Sendevorrichtung, die einen Prozessor und einen Speicher umfasst, wobei der Speicher konfiguriert ist, um darin ein Computerprogramm zu speichern, und wobei der Prozessor konfiguriert ist zum Ausführen des Computerprogramms für die Sendevorrichtung, um das Kommunikationsverfahren nach einem der Ansprüche 1 bis 6 zu implementieren.

10. Empfangsvorrichtung, die einen Prozessor und einen Speicher umfasst, wobei der Speicher konfiguriert ist, um darin ein Computerprogramm zu speichern, und wobei der Prozessor konfiguriert ist zum Ausführen des Computerprogramms für die Empfangsvorrichtung, um das Kommunikationsverfahren nach einem der Ansprüche 7 bis 8 zu implementieren.

11. Kommunikationssystem, das die Sendevorrichtung nach Anspruch 9 und die Empfangsvorrichtung nach Anspruch 10 umfasst.

12. Computerprogramm, wobei, wenn das Computerprogramm in einem Prozessor einer Sendevorrichtung ausgeführt wird, die Sendevorrichtung veranlasst wird, das Kommunikationsverfahren nach einem der Ansprüche 1 bis 6 durchzuführen.

13. Computerprogramm, wobei, wenn das Computerprogramm in einem Prozessor einer Empfangsvorrichtung ausgeführt wird, die Empfangsvorrichtung veranlasst wird, das Kommunikationsverfahren nach einem der Ansprüche 7 bis 8 durchzuführen.

14. Computerlesbares Speichermedium, wobei in dem computerlesbaren Speichermedium ein Computerprogramm gespeichert ist und wobei, wenn das Computerprogramm in einem Computer ausgeführt wird, das Kommunikationsverfahren nach einem der Ansprüche 1 bis 6 implementiert wird.

15. Computerlesbares Speichermedium, wobei in dem computerlesbaren Speichermedium ein Computerprogramm gespeichert ist und wobei, wenn das Computerprogramm in einem Computer ausgeführt wird, das Kommunikationsverfahren nach einem der Ansprüche 7 bis 8 implementiert wird.

## Revendications

1. Procédé de communication appliqué à un dispositif émetteur, le procédé comprenant :
l'obtention (801) d'une charge utile d'une couche application ;
l'encapsulation (802) de la charge utile de la couche application pour obtenir une trame de données de réseau hétérogène, la trame de données de réseau hétérogène ne comprenant pas d'en-tête de trame de protocole de couche réseau, et une longueur d'un en-tête de trame de la trame de données de réseau hétérogène étant inférieure à une longueur d'un en-tête de trame de protocole de couche transport ; et
l'envoi (803) de la trame de données de réseau hétérogène à un dispositif récepteur dans un réseau hétérogène ;
le procédé comprenant en outre :
l'envoi d'une demande de connexion au dispositif récepteur, la demande de connexion étant transportée dans la trame de données de réseau hétérogène, et la demande de connexion étant utilisée pour demander l'établissement d'une connexion avec le dispositif récepteur ; et/ou
l'envoi d'une demande d'interruption au dispositif récepteur, la demande d'interruption étant transportée dans la trame de données de réseau hétérogène, et la demande d'interruption étant utilisée pour initier la déconnexion du dispositif récepteur.

2. Procédé selon la revendication 1, dans lequel l'en-tête de trame de la trame de données de réseau hétérogène comprend une indication de longueur de fenêtre, l'indication de longueur de fenêtre indique une longueur de fenêtre de réception, et une longueur de l'indication de longueur de fenêtre est de 8 bits.

3. Procédé selon la revendication 2, dans lequel un premier bit de l'indication de longueur de fenêtre indique si un facteur d'échelle de fenêtre existe, et les 7 derniers bits de l'indication de longueur de fenêtre indiquent une longueur de base d'une fenêtre de réception.

4. Procédé selon la revendication 3 dans lequel, si le premier bit de l'indication de longueur de fenêtre indique que le facteur d'échelle de fenêtre existe, la longueur de fenêtre de réception est déterminée sur la base de la longueur de base de la fenêtre de réception et du facteur d'échelle de fenêtre, le facteur d'échelle de fenêtre étant obtenu par négociation entre le dispositif émetteur et le dispositif récepteur.

5. Procédé selon la revendication 1, dans lequel l'en-tête de trame de la trame de données de réseau hétérogène comprend au moins un des éléments suivants :
une indication de fusion, l'indication de fusion indiquant si une trame de données de réseau hétérogène courante doit être fusionnée avec une trame de données de réseau hétérogène ultérieure, et une longueur de l'indication de fusion étant de 1 bit ;
une étiquette de flux, l'étiquette de flux indiquant une adresse du dispositif récepteur, et une longueur de l'étiquette de flux étant de 16 bits ; et
une indication d'indice de transmission, l'indication d'indice de transmission indiquant un nombre de transmissions ou de retransmissions de la trame de données de réseau hétérogène, et une longueur de l'indication d'indice de transmission étant de 2 bits.

6. Procédé selon l'une quelconque des revendications 1 à 5, le procédé comprenant en outre, après l'envoi de la trame de données de réseau hétérogène à un dispositif récepteur dans un réseau hétérogène : la réception d'informations d'accusé de réception envoyées par le dispositif récepteur, les informations d'accusé de réception étant utilisées pour accuser réception d'une ou plusieurs trames de données de réseau hétérogène envoyées par le dispositif émetteur.

7. Procédé de communication appliqué à un dispositif récepteur, le procédé comprenant :
la réception (803) d'une trame de données de réseau hétérogène dans un réseau hétérogène, la trame de données de réseau hétérogène ne comprenant pas d'en-tête de trame de protocole de couche réseau, et une longueur d'un en-tête de trame de la trame de données de réseau hétérogène étant inférieure à une longueur d'un en-tête de trame de protocole de couche transport ;
la désencapsulation (805) de la trame de données de réseau hétérogène pour obtenir une charge utile ; et
l'envoi de la charge utile à une couche application du dispositif récepteur ;
le procédé comprenant en outre, avant la réception (803) d'une trame de données de réseau hétérogène dans un réseau hétérogène :
la réception d'une demande de connexion envoyée par le dispositif émetteur, et l'établissement d'une connexion avec le dispositif émetteur sur la base de la demande de connexion, la demande de connexion étant transportée dans une trame de données de réseau hétérogène ; et/ou
l'envoi d'une demande d'interruption au dispositif émetteur, la demande d'interruption étant transportée dans une trame de données de réseau hétérogène, et la demande d'interruption étant utilisée pour initier la déconnexion du dispositif émetteur.

8. Procédé selon la revendication 7, le procédé comprenant en outre, après la réception (803) d'une trame de données de réseau hétérogène dans un réseau hétérogène :
l'envoi (804) d'informations d'accusé de réception à un dispositif émetteur, les informations d'accusé de réception étant utilisées pour accuser réception d'une ou plusieurs trames de données de réseau hétérogène envoyées par le dispositif émetteur.

9. Appareil émetteur, comprenant un processeur et une mémoire, la mémoire étant conçue pour stocker un programme informatique, et le processeur étant conçu pour exécuter le programme informatique afin que le dispositif émetteur mette en œuvre le procédé de communication selon l'une quelconque des revendications 1 à 6.

10. Appareil récepteur, comprenant un processeur et une mémoire, la mémoire étant conçue pour stocker un programme informatique, et le processeur étant conçu pour exécuter le programme informatique afin que le dispositif récepteur mette en œuvre le procédé de communication selon l'une quelconque des revendications 7 à 8.

11. Système de communication, comprenant le dispositif émetteur selon la revendication 9 et le dispositif récepteur selon la revendication 10.

12. Programme informatique, le programme informatique, lors de son exécution sur un processeur d'un dispositif émetteur, amenant le dispositif émetteur à effectuer le procédé de communication selon les revendications 1 à 6.

13. Programme informatique, le programme informatique, lors de son exécution sur un processeur d'un dispositif récepteur, amenant le dispositif récepteur à effectuer le procédé de communication selon les revendications 7 à 8.

14. Support de stockage lisible par ordinateur, le support de stockage lisible par ordinateur stockant un programme informatique, et le procédé de communication selon l'une quelconque des revendications 1 à 6 étant mis en œuvre lors de l'exécution du programme informatique sur un ordinateur.

15. Support de stockage lisible par ordinateur, le support de stockage lisible par ordinateur stockant un programme informatique, et le procédé de communication selon l'une quelconque des revendications 7 à 8 étant mis en œuvre lors de l'exécution du programme informatique sur un ordinateur.
